# EUROPEAN PATENT SPECIFICATION

(11) **EP 3 473 413 B1**
(45) Date of publication and mention of the grant of the patent: **05.07.2023**
(21) Application number: 18201030.6
(22) Date of filing: 17.10.2018
(51) Int. Cl.: B29C 64/245, B29C 64/40, B29C 64/30, B29C 64/153, B33Y 30/00

(54) **ADDITIVE MANUFACTURING METHODS AND SYSTEMS**
VERFAHREN UND SYSTEME ZUR GENERATIVEN FERTIGUNG
PROCÉDÉS ET SYSTÈMES DE FABRICATION ADDITIVE

(30) Priority: 19.10.2017 US 201715788579
(43) Date of publication of application: 24.04.2019
(73) Proprietor: Collins Engine Nozzles, Inc., West Des Moines, IA 50265 (US)
(72) Inventor: DONOVAN, Matthew, Ankeny, IA Iowa 50023 (US); THOMSON, Neal A., West Des Moines, IA Iowa 50265 (US)
(74) Representative: Dehns

(56) References cited:
- EP-A1- 0 734 842
- WO-A1-2015/009444
- WO-A1-2016/078800
- DE-A1-102011 011 325

## Description

### BACKGROUND

### 1. Field

The present disclosure relates to additive manufacturing methods and systems.

### 2. Description of Related Art

Complex geometry created by conventional powder bed fusion additive manufacture is directional and can only use a single material.

Such conventional methods and systems have generally been considered satisfactory for their intended purpose. However, there is still a need in the art for improved additive manufacturing methods and systems. The present disclosure provides a solution for this need.

WO 2016/078800 A1 discloses in accordance with the preamble of claim 1 a method of manufacturing a first segment of a component by a powder-bed manufacturing process, and manufacturing a second segment of the component by an additive manufacturing process.

WO 2015/009444 A1 discloses an additive manufacturing system in accordance with the preamble of claim 10 including a support structure defining a cavity. A moveable platform is contained within the cavity and is capable of moving along a build direction within the cavity. The moveable platform is shaped to receive and hold a substrate that includes at least a portion of a finished part.

DE 10 2011 011325 A discloses a method for generative production or repair of a component, in particular a turbomachine comprising a layered material structure, which can be done directly on a construction platform and / or a component to be repaired, wherein a first material structure with a first construction direction and a second material structure having a second construction direction, which differs from the first construction direction, for producing a load-optimized structure is produced.

### SUMMARY

From a first aspect, a method as claimed in claim 1 is provided.

Inserting the first portion in the second build plate can include aligning the first portion flushly with a surface of the second build plate. A division of the first portion and second portion can be preselected by a user such that the first build direction and second build direction allow building of both the first portion and the second portion without support structure.

The method can include removing the plurality of portions (e.g., the first and second portion or any other suitable number of portions), inserting the plurality of portions into an additional build plate, and additively manufacturing an additional portion of the part in an additional build direction. This can be repeated any suitable and/or desired number of times.

Additively manufacturing the first portion can include using a first material and additively manufacturing the second portion includes using a second material different from the first material. The method can include removing the plurality of portions, inserting the plurality of portions into an additional build plate, and additively manufacturing an additional portion of the part in an additional build direction, such that the additional portion includes an additional material different from the first material and/or the second material. This can be repeated any suitable and/or desired number of times.

From a further aspect, a system as claimed in claim 10 is provided.

In certain embodiments, the part portion recess can include an open volume equal to or greater than a volume of the first portion such that the first portion fits entirely within the part portion recess. For example, the part portion recess can be defined such that the first portion aligns flushly with a build surface of the build plate (e.g., for a roller recoater type system).

The body can be configured to attach to an additive manufacturing build plate as a fixture plate. In certain embodiments, the body can be configured to replace a build plate of an additive manufacturing machine.

The additive manufacturing machine can be any suitable type of additive manufacturing machine (e.g., a powder bed fusion system having a roller recoater). The part can be any suitable part (e.g., a part for an aerospace application).

These and other features of the systems and methods of the subject disclosure will become more readily apparent to those skilled in the art from the following detailed description taken in conjunction with the drawings.

### BRIEF DESCRIPTION OF THE DRAWINGS

So that those skilled in the art to which the subject disclosure appertains will readily understand how to make and use the devices and methods of the subject disclosure without undue experimentation, embodiments thereof will be described in detail herein below with reference to certain figures, wherein:
Fig. 1 is a perspective view of an embodiment in accordance with this disclosure showing a first portion of a part built in a first build direction on a first build plate;
Fig. 2 is a cross-sectional view of the Fig. 1;
Fig. 3 is a perspective view of the first portion of Fig. 1 removed from the build plate;
Fig. 4 is a perspective view of an embodiment of a second build plate in accordance with this disclosure, showing a part portion recess defined therein;
Fig. 5 is a perspective, transparent view of the first portion of Fig. 1 disposed in the second build plate of Fig. 4 in accordance with this disclosure;
Fig. 6 shows a perspective view of the first portion of Fig. 1 disposed in the second build plate of Fig. 4, showing the first portion flushly mating with the second build plate;
Fig. 7 is a perspective view of a second portion built on the first portion within the second build plate; and
Fig. 8 shows the first portion and the second portion of Fig. 7 removed from the second build plate.

### DETAILED DESCRIPTION

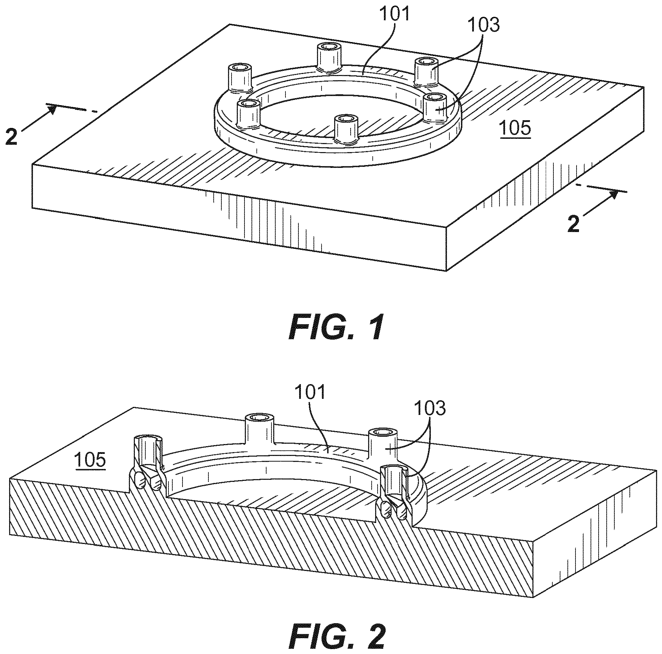

Reference will now be made to the drawings wherein like reference numerals identify similar structural features or aspects of the subject disclosure. For purposes of explanation and illustration, and not limitation, an illustrative view of an embodiment of a method and a system in accordance with the disclosure is shown in Figs 1-8. The systems and methods described herein can be used to improve additive manufacturing quality and speed, for example.

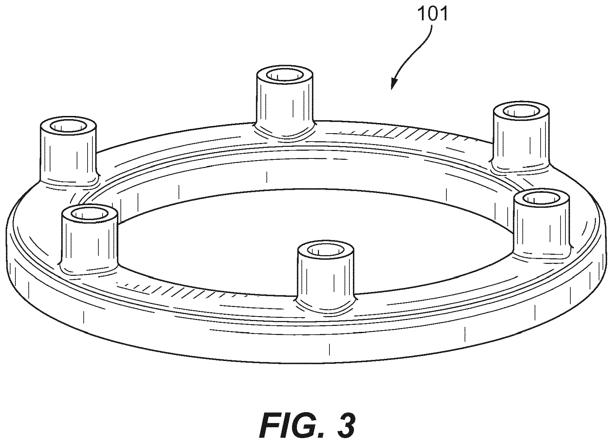

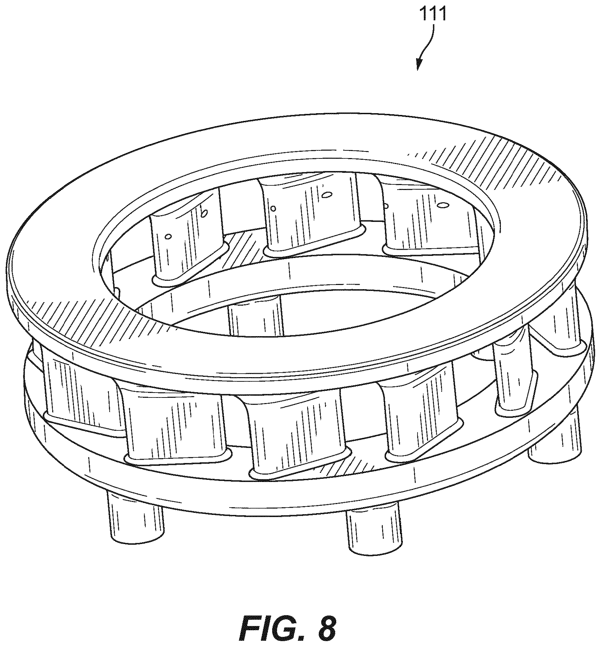

Referring to Figs. 1 and 2, a method can include additively manufacturing a first portion 101 of a part 111 (e.g., shown in Fig. 8) (e.g., a turbomachine component) in a first build direction (e.g., upward from the build plate in the direction of hollow posts 103) on a first build plate 105. Referring to Fig. 3, the method can include removing the first portion 101 of the part 111 from the first build plate 105 after additive manufacturing of the first portion 101.

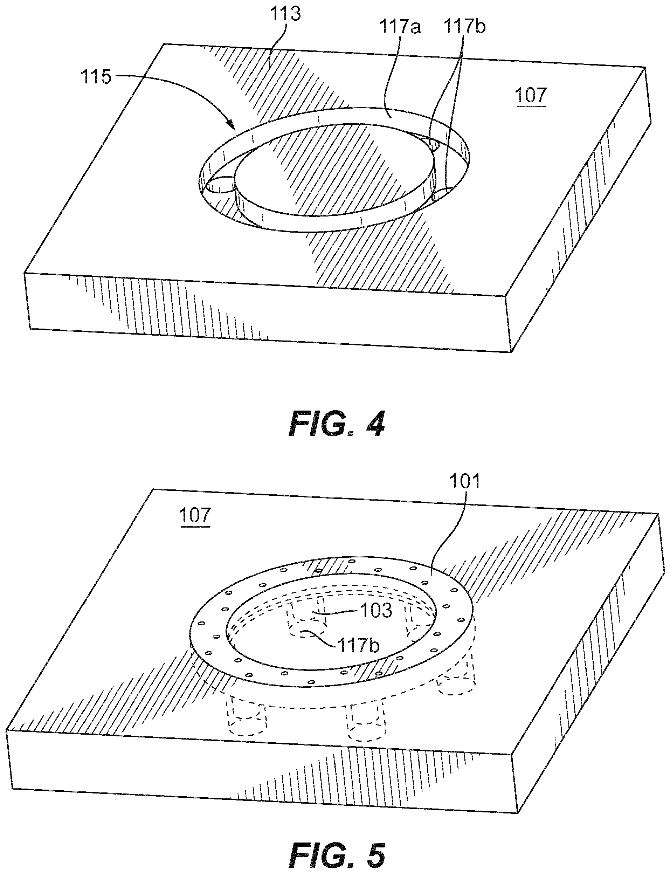

Referring to Figs. 4-6, the method can include inserting the first portion 101 of the part 111 on a second build plate 107. The second build plate 107 is configured to receive at least a portion of the first portion 101 of the part 111, as shown in Fig. 4 (e.g., in an upside down position or in any other suitable position).

Inserting the first portion 101 in the second build plate 107 can include aligning the first portion 101 flushly with a surface of the second build plate 107.

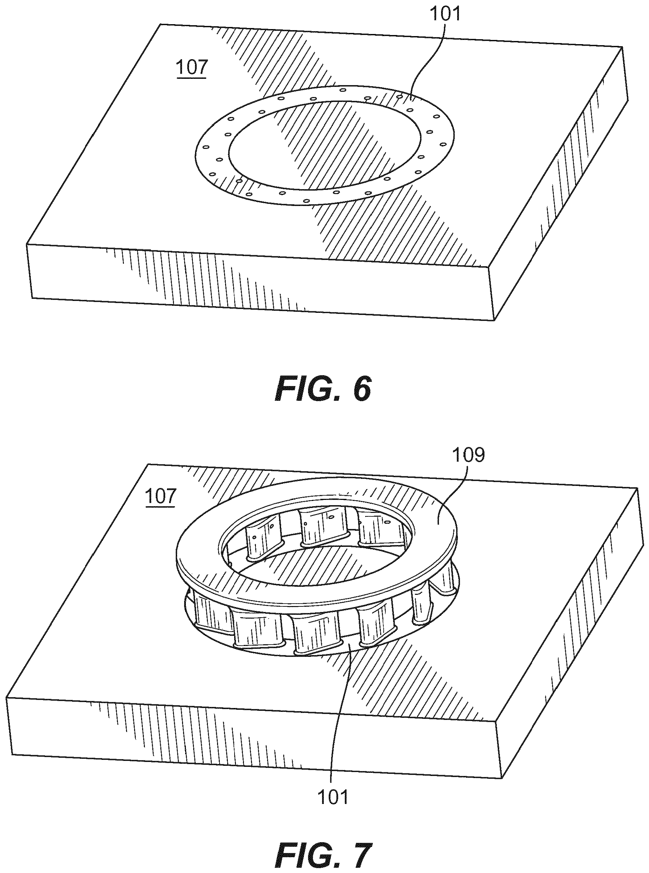

Referring to Fig. 7, the method can also include additively manufacturing, in a second build direction opposite to the first build direction a second portion 109 on the first portion 101 of the part 111 that is on the second build plate 107. A division of the first portion 101 and second portion 109 can be preselected by a user such that the first build direction and second build direction allow building of both the first portion 101 and the second portion 107 (and/or any suitable number of additional portions) without support structure.

The method can include removing the plurality of portions (e.g., the first and second portion 101, 109 or any other suitable number of portions), inserting the plurality of portions into an additional build plate (e.g., configured to receive at least a portion of the plurality of portions therein), and additively manufacturing an additional portion of the part in an additional build direction (e.g., the same or different from the first and/or second build direction, and/or any other additional build direction). This can be repeated any suitable and/or desired number of times.

Additively manufacturing the first portion 101 can include using a first material (e.g., any suitable material) and additively manufacturing the second portion can include using a second material (e.g., any suitable material) different from the first material. The method can include removing the plurality of portions, inserting the plurality of portions into an additional build plate, and additively manufacturing an additional portion of the part in an additional build direction, such that the additional portion includes an additional material different from the first material and/or the second material. This can be repeated any suitable and/or desired number of times.

Referring to Fig. 8, for example, the method can include removing the completed part 111 (built from first portion 101 and second portion 109) from the second build plate 107. It is contemplated that any suitable number of portions can be manufactured in any suitable number of build directions using any suitable number of materials and build plates (which can be made from any suitable number of portions).

As appreciated by those having ordinary skill in the art, the two or more portions 101 and 109 can be combined and/or attached to one another in any suitable manner. For example, in powder bed fusion systems, the act of sintering the powder together can cause the second portion 109 to weld to the first portion 101. In certain embodiments, alternatively or additionally, the one or more portions 101, 109 can be physically linked together based on their geometries being intertwined without the necessity to be welded together. Additionally, or alternatively, any other suitable connection (e.g., adherence with a suitable binding agent) is contemplated herein.

In accordance with at least one aspect of this disclosure, referring to Fig. 4, a build plate 107 for an additive manufacturing machine can include a build plate body 113 defining a part portion recess 115 that can be configured to receive a portion (e.g., first portion 115) of a part and to allow additive manufacturing of a second portion (e.g., second portion 109) of a part on the first portion of the part. The build plate body 113 can be configured to be used as a build surface for an additive manufacturing machine. In certain embodiments, the body 113 can be configured to attach to an additive manufacturing build plate as a fixture plate. In certain embodiments, the body 113 can be configured to replace a build plate of an additive manufacturing machine.

The part portion recess 115 includes a plurality of apertures 117a, 117b defined in the body 113. In certain embodiments, the part portion recess 115 can include an open volume equal to or greater than a volume of the first portion such that the first portion fits entirely within the part portion recess 115. In certain embodiments, any suitable apertures can be defined in the second build plate 107 such that the first portion 101 is caused to be oriented in a particular manner due to the orientation of the apertures in the recess 115. For example, the apertures 117b as shown in Figs. 4 and 5 can be clocked in any suitable manner relative to the build plate 107. In certain embodiments, it is contemplated that certain non-symmetric portions may require certain orientation on plate to allow the printer to print the correct structure in the correct orientation relative to the first portion.

The part portion recess 115 can be defined such that the first portion aligns flushly with a build surface of the build plate 107 (e.g., for a roller recoater type system). This can allow a roller type recoater system to coat the build plate properly for continued additive manufacture, for example.

The additive manufacturing machine can be any suitable type of additive manufacturing machine (e.g., a powder bed fusion system having a roller recoater). The part can be any suitable part (e.g., a part for an aerospace application). For example, as shown the part includes a complex inner network of channels and can be used in a fuel nozzle.

Embodiments as described above include a method for constructing components where the initial shape is additively manufactured, removed from the build plate, inverted or otherwise reoriented, and a second additive build can be used to complete the component/add more to the component. In accordance with certain embodiments, the features selected to be built for the first build direction can be based on geometry (e.g., to prevent overhang and use of support structure) and/or material properties. A standard first build plate can be used, then the component is removed from initial build plate. A second build plate can include any suitable recess to accept the first portion in the reoriented position and can cause the portion to align to second build plate. Then, additive material can be added to the surface of the first portion. The material may be changed to allow for an AM part have two or more different materials. Each selected build direction can allow geometry to be optimized for each build direction (e.g., to minimize or eliminate overhangs).

Embodiments allow for additional part complexity, simplified or eliminated post processing, and the ability to construct an additive component from two different materials. As appreciated by those having ordinary skill in the art, the inverted component can allow for geometry to be manufactured with one or more overhangs eliminated during manufacture.

The methods and systems of the present disclosure, as described above and shown in the drawings, provide for improved additive manufacturing systems and methods. While the apparatus and methods of the subject disclosure have been shown and described with reference to embodiments, those skilled in the art will readily appreciate that changes and/or modifications may be made thereto without departing from the scope of the subject as defined in the appended claims.

## Claims

1. A method, comprising:
additively manufacturing a first portion (101) of a part (111) in a first build direction on a first build plate (105);
removing the first portion (101) of the part (111) from the first build plate (105);
and
additively manufacturing a second portion (109) on the first portion (101) of the part (111),
**characterised by** inserting the first portion (101) of the part (111) on a second build plate (107) that is configured to receive at least a portion of the first portion (101) of the part (111),
wherein the additively manufacturing a second portion (109) on the first portion (101) is in a second build direction opposite to the first build direction, on the first portion (101) of the part (111) that is on the second build plate (107).

2. The method of claim 1, wherein inserting the first portion (101) in the second build plate (107) includes aligning the first portion (101) flushly with a surface of the second build plate (107).

3. The method of claim 1 or 2, wherein a division of the first portion (101) and second portion (109) are preselected by a user such that the first build direction and second build direction allow building of both the first portion (101) and the second portion (109) without support structure.

4. The method of claim 1, 2 or 3, wherein additively manufacturing the first portion (101) includes using a first material and additively manufacturing the second portion (109) includes using a second material different from the first material.

5. The method of any preceding claim, further comprising removing the plurality of portions, inserting the plurality of portions into an additional build plate, and additively manufacturing an additional portion of the part (111) in an additional build direction.

6. The method of claim 5, further comprising repeating removing the plurality of portions, inserting the plurality of portions into an additional build plate, and additively manufacturing an additional portion of the part (111) in an additional build direction one or more times.

7. The method of claim 4, further comprising removing the plurality of portions, inserting the plurality of portions into an additional build plate, and additively manufacturing an additional portion of the part (111) in an additional build direction, wherein the additional portion includes an additional material different from the first material and/or the second material.

8. The method of claim 7, further comprising repeating removing the plurality of portions, inserting the plurality of portions into an additional build plate, and additively manufacturing an additional portion of the part (111) in an additional build direction one or more times.

9. The method of any preceding claim, further comprising removing the part (111) from the second build plate (107).

10. A system, comprising:
a build plate for an additive manufacturing machine; and
a first portion of a part (111), the build plate comprising:
a build plate body defining a part portion recess (115) configured to receive a portion of the part and to allow additive manufacturing of a second portion (109) of the part (111) on the first portion (101) of the part (111), the build plate body configured to be used as a build surface for an additive manufacturing machine,
**characterised in that** the part portion recess (115) includes a plurality of apertures (117a, 117b) defined in the body,
wherein the first portion of the part is inserted into the part portion recess.

11. The system of claim 10, wherein the part portion recess (115) includes an open volume equal to or greater than a volume of the first portion (101) such that the first portion (101) fits entirely within the part portion recess (115).

12. The system of claim 10 or 11, wherein the part portion recess (115) is defined such that the first portion (101) aligns flushly with a build surface of the build plate.

13. The system of any of claims 10 to 12, wherein the body is configured to attach to an additive manufacturing build plate as a fixture plate.

14. The system of any of claims 10 to 13, wherein the body is configured to replace a build plate of an additive manufacturing machine.

## Patentansprüche

1. Verfahren, umfassend:
generatives Fertigen eines ersten Abschnitts (101) eines Teils (111) in einer ersten Baurichtung auf einer ersten Bauplatte (105);
Entfernen des ersten Abschnitts (101) des Teils (111) von der ersten Bauplatte (105);
und
generatives Fertigen eines zweiten Abschnitts (109) auf dem ersten Abschnitt (101) des Teils (111),
**gekennzeichnet durch** Einsetzen des ersten Abschnitts (101) des Teils (111) auf eine zweite Bauplatte (107), die dazu konfiguriert ist, mindestens einen Abschnitt des ersten Abschnitts (101) des Teils (111) aufzunehmen,
wobei das generative Fertigen eines zweiten Abschnitts (109) auf dem ersten Abschnitt (101) auf dem ersten Abschnitt (101) des Teils (111), das sich auf der zweiten Bauplatte (107) befindet, in einer zweiten Baurichtung erfolgt, die der ersten Baurichtung entgegengesetzt ist.

2. Verfahren nach Anspruch 1, wobei das Einsetzen des ersten Abschnitts (101) in die zweite Bauplatte (107) bündiges Ausrichten des ersten Abschnitts (101) mit einer Oberfläche der zweiten Bauplatte (107) beinhaltet.

3. Verfahren nach Anspruch 1 oder 2, wobei eine Unterteilung des ersten Abschnitts (101) und des zweiten Abschnitts (109) von einem Benutzer so vorausgewählt wird, dass die erste Baurichtung und die zweite Baurichtung den Bau sowohl des ersten Abschnitts (101) als auch des zweiten Abschnitts (109) ohne Stützstruktur ermöglichen.

4. Verfahren nach Anspruch 1, 2 oder 3, wobei das generative Fertigen des ersten Abschnitts (101) Verwenden eines ersten Materials beinhaltet und das generative Fertigen des zweiten Abschnitts (109) Verwenden eines zweiten, von dem ersten Material verschiedenen Materials beinhaltet.

5. Verfahren nach einem der vorhergehenden Ansprüche, ferner umfassend Entfernen der Vielzahl von Abschnitten, Einsetzen der Vielzahl von Abschnitten in eine zusätzliche Bauplatte und generatives Fertigen eines zusätzlichen Abschnitts des Teils (111) in einer zusätzlichen Baurichtung.

6. Verfahren nach Anspruch 5, ferner umfassend Wiederholen des Entfernens der Vielzahl von Abschnitten, des Einsetzens der Vielzahl von Abschnitten in eine zusätzliche Bauplatte und des generativen Fertigens eines zusätzlichen Abschnitts des Teils (111) in einer zusätzlichen Baurichtung ein oder mehrere Male.

7. Verfahren nach Anspruch 4, ferner umfassend Entfernen der Vielzahl von Abschnitten, Einsetzen der Vielzahl von Abschnitten in eine zusätzliche Bauplatte und generatives Fertigen eines zusätzlichen Abschnitts des Teils (111) in einer zusätzlichen Baurichtung, wobei der zusätzliche Abschnitt ein zusätzliches Material beinhaltet, das sich von dem ersten Material und/oder dem zweiten Material unterscheidet.

8. Verfahren nach Anspruch 7, ferner umfassend Wiederholen des Entfernens der Vielzahl von Abschnitten, des Einsetzens der Vielzahl von Abschnitten in eine zusätzliche Bauplatte und des generativen Fertigens eines zusätzlichen Abschnitts des Teils (111) in einer zusätzlichen Baurichtung ein oder mehrere Male.

9. Verfahren nach einem der vorhergehenden Ansprüche, ferner umfassend Entfernen des Teils (111) von der zweiten Bauplatte (107) .

10. System, umfassend:
eine Bauplatte für eine Maschine für generative Fertigung; und
einen ersten Abschnitt eines Teils (111), wobei die Bauplatte umfasst:
einen Bauplattenkörper, der eine Aussparung (115) für einen Abschnitt des Teils definiert, die dazu konfiguriert ist, einen Abschnitt des Teils aufzunehmen und eine generative Fertigung eines zweiten Abschnitts (109) des Teils (111) auf dem ersten Abschnitt (101) des Teils (111) zu ermöglichen, wobei der Bauplattenkörper dazu konfiguriert ist, als Bauoberfläche für eine Maschine für generative Fertigung verwendet zu werden,
**dadurch gekennzeichnet, dass** die Aussparung (115) des Abschnitts des Teils eine Vielzahl von Öffnungen (117a, 117b) beinhaltet, die in dem Körper definiert ist,
wobei der erste Abschnitt des Teils in die Teilabschnittsaussparung eingesetzt ist.

11. System nach Anspruch 10, wobei die Teilabschnittsaussparung (115) ein offenes Volumen beinhaltet, das gleich oder größer als ein Volumen des ersten Abschnitts (101) ist, sodass der erste Abschnitt (101) vollständig in die Teilabschnittsaussparung (115) passt.

12. System nach Anspruch 10 oder 11, wobei die Teilabschnittsaussparung (115) so definiert ist, dass der erste Abschnitt (101) bündig mit einer Bauoberfläche der Bauplatte ausgerichtet ist.

13. System nach einem der Ansprüche 10 bis 12, wobei der Körper dazu konfiguriert ist, an einer Bauplatte für die generative Fertigung als Befestigungsplatte befestigt zu werden.

14. System nach einem der Ansprüche 10 bis 13, wobei der Körper dazu konfiguriert ist, eine Bauplatte einer Maschine für generative Fertigung zu ersetzen.

## Revendications

1. Procédé, comprenant :
la fabrication additive d'une première partie (101) d'une pièce (111) dans une première direction de construction sur une première plaque de construction (105) ;
le retrait de la première partie (101) de la pièce (111) de la première plaque de construction (105) ;
et
la fabrication additive d'une seconde partie (109) sur la première partie (101) de la pièce (111),
**caractérisé par** l'insertion de la première partie (101) de la pièce (111) sur une seconde plaque de construction (107) qui est configurée pour recevoir au moins une partie de la première partie (101) de la pièce (111),
dans lequel la fabrication additive d'une seconde partie (109) sur la première partie (101) se fait dans une seconde direction de construction opposée à la première direction de construction, sur la première partie (101) de la pièce (111) qui se trouve sur la seconde plaque de construction (107).

2. Procédé selon la revendication 1, dans lequel l'insertion de la première partie (101) dans la seconde plaque de construction (107) comporte l'alignement de la première partie (101) au même niveau qu'une surface de la seconde plaque de construction (107) .

3. Procédé selon la revendication 1 ou 2, dans lequel une division de la première partie (101) et de la seconde partie (109) est présélectionnée par un utilisateur de sorte que la première direction de construction et la seconde direction de construction permettent la construction à la fois de la première partie (101) et de la seconde partie (109) sans structure de support.

4. Procédé selon la revendication 1, 2 ou 3, dans lequel la fabrication additive de la première partie (101) comporte l'utilisation d'un premier matériau et la fabrication additive de la seconde partie (109) comporte l'utilisation d'un second matériau différent du premier matériau.

5. Procédé selon une quelconque revendication précédente, comprenant en outre le retrait de la pluralité de parties, l'insertion de la pluralité de parties dans une plaque de construction supplémentaire et la fabrication additive d'une partie supplémentaire de la pièce (111) dans une direction de construction supplémentaire.

6. Procédé selon la revendication 5, comprenant en outre la répétition du retrait de la pluralité de parties, l'insertion de la pluralité de parties dans une plaque de construction supplémentaire et la fabrication additive d'une partie supplémentaire de la pièce (111) dans une direction de construction supplémentaire une ou plusieurs fois.

7. Procédé selon la revendication 4, comprenant en outre le retrait de la pluralité de parties, l'insertion de la pluralité de parties dans une plaque de construction supplémentaire et la fabrication additive d'une partie supplémentaire de la pièce (111) dans une direction de construction supplémentaire, dans lequel la partie supplémentaire comporte un matériau supplémentaire différent du premier matériau et/ou du second matériau.

8. Procédé selon la revendication 7, comprenant en outre la répétition du retrait de la pluralité de parties, l'insertion de la pluralité de parties dans une plaque de construction supplémentaire et la fabrication additive d'une partie supplémentaire de la pièce (111) dans une direction de construction supplémentaire une ou plusieurs fois.

9. Procédé selon une quelconque revendication précédente, comprenant en outre le retrait de la pièce (111) de la seconde plaque de construction (107).

10. Système, comprenant :
une plaque de construction pour une machine de fabrication additive ; et
une première partie d'une pièce (111), la plaque de construction comprenant :
un corps de plaque de construction définissant un évidement de partie de pièce (115) configuré pour recevoir une partie de la pièce et pour permettre la fabrication additive d'une seconde partie (109) de la pièce (111) sur la première partie (101) de la pièce (111), le corps de plaque de construction configuré pour être utilisé comme surface de construction pour une machine de fabrication additive,
**caractérisé en ce que** l'évidement de partie de pièce (115) comporte une pluralité d'ouvertures (117a, 117b) définies dans le corps,
dans lequel la première partie de la pièce est insérée dans l'évidement de la partie de pièce.

11. Système selon la revendication 10, dans lequel l'évidement de partie de pièce (115) comporte un volume ouvert supérieur ou égal à un volume de la première partie (101) de sorte que la première partie (101) s'adapte entièrement à l'intérieur de l'évidement de partie de pièce (115).

12. Système selon la revendication 10 ou 11, dans lequel l'évidement de partie de pièce (115) est défini de sorte que la première partie (101) s'aligne au même niveau qu'une surface de construction de la plaque de construction.

13. Système selon l'une quelconque des revendications 10 à 12, dans lequel le corps est configuré pour se fixer à une plaque de construction de fabrication additive en tant que plaque de fixation.

14. Système selon l'une quelconque des revendications 10 à 13, dans lequel le corps est configuré pour remplacer une plaque de construction d'une machine de fabrication additive.
